# EUROPEAN PATENT SPECIFICATION

(11) **EP 3 153 864 B1**
(45) Date of publication and mention of the grant of the patent: **20.11.2019**
(21) Application number: 15188559.7
(22) Date of filing: 06.10.2015
(51) Int. Cl.: G01N 35/00, G01N 35/02, G01N 35/04

(54) **APPARATUS AND METHOD FOR PROCESSING AT LEAST ONE SAMPLE**
VORRICHTUNG UND VERFAHREN ZUM VERARBEITEN VON MINDESTENS EINER PROBE
APPAREIL ET PROCÉDÉ POUR TRAITER AU MOINS UN ÉCHANTILLON

(43) Date of publication of application: 12.04.2017
(73) Proprietor: Roche Diagnostics GmbH, 68305 Mannheim (DE); F. Hoffmann-La Roche AG, 4070 Basel (CH)
(72) Inventor: STEINERT, Chris, 6005 Luzern (CH)
(74) Representative: Altmann Stößel Dick Patentanwälte PartG mbB

(56) References cited:
- CA-A- 1 199 258
- US-A1- 2006 245 865
- US-A1- 2009 227 033
- US-A1- 2015 079 695
- US-B1- 6 544 476

## Description

### Field of the invention

The present invention relates to an apparatus and a method for processing at least one sample.

### Related art

Apparatus for processing at least one sample, particularly analytical instruments and more particularly medical instruments, in the sense of the present invention serve to process samples in order to allow the samples to be analyzed. Such samples include but are not limited to body fluids which are examined, especially blood or any other liquid reagents used in the medical field. Modern apparatus of this kind are largely fully automatic in operation and only the samples stored in reagent vessels have to be inserted into the apparatus and the desired analysis has to be entered.

The present invention is intended for apparatus which operate with liquids reagents which are contained in the reagent vessels which may be made of plastics. The apparatus usually have an input for inputting a vessel into a processing chamber where the intended processing such as an analysis is carried out. Automated apparatus are configured to process a plurality of vessels such as 5 or 8 vessels which are input in a so called rack. The vessels are processed in a subsequent order.

It may be the case that a further sample is intended to be processed before all of the samples input by the rack are processed. Particularly, hematology is critical in terms of time as whole blood has to be resuspended as promptly as possible to the measurement because blood particles sediment fast.

### Problem to be solved

Using the above-described apparatus for processing a sample provides advantages concerning the handling. Nevertheless, there are still some drawbacks. For this reason, apparatus have been provided which allow to manually input a further sample. For example, US 4,609,017 A describes an apparatus, wherein a so-called STAT sample (STAT = short turn around time) can be loaded manually into a carrier at the bottom of an input stack. Such loading of a STAT tube causes another tube to be removed from its carrier. Thus, such a single tube input interrupts the automated input, which reduces the throughput of the apparatus. Further, users have to wait for a significant period of time until the single tube inlet is accessible after request.

JP 2013-167650 A describes another apparatus which comprises a first input for inputting a first vessel and a separate second input for inputting a second vessel into a processing chamber. The first and second vessels may be linearly moved in all three dimensions of space to a processing position in the processing chamber. Thus, this apparatus uses several linear axes which increases the manufacturing costs of the apparatus. Further, the coordination of the handling of the different samples along the linear axes is rather complex.

US2009/227033 and CA1199258 also disclose sample processing apparatus comprising an automated and a separate manual input for samples.

It is therefore an objective of the present invention to provide an apparatus for processing a sample allowing processing of not only automatically input vessels but also STAT vessels, which are to be processed with a higher priority than the automatically input vessels, such that the manufacturing costs are decreased and the workflow is improved or accelerated.

### Summary of the invention

This problem is solved by an apparatus for processing at least one vessel and a method for processing at least one vessel, having the features of the independent claims. Preferred embodiments of the invention, which may be realized in an isolated way or in any arbitrary combination, are disclosed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Further, as used in the following, the terms "first", second", "third" and the like are exclusively used to linguistically distinguish between the respective constructional members associated with these terms and are not intended to give a certain order of importance.

According to the present invention, an apparatus for processing at least one sample is disclosed. The apparatus comprises a processing chamber, a first input for inputting at least a first vessel into the processing chamber, a second input for inputting at least a second vessel into the processing chamber, wherein the second input is different from the first input, a rotor comprising at least a first compartment for receiving the first vessel from the first input and a second compartment for receiving the second vessel from the second input, a gripping device adapted to at least grip the first vessel and to transport the first vessel from the first input to the first compartment of the rotor, and a pipetting device at least adapted to pipette a sample from the first vessel and/or the second vessel. The rotor is rotatable at least between a first processing position, at which the first vessel is transportable to the first compartment of the rotor by the gripping device, a second processing position, at which the second vessel is loadable into the second compartment of the rotor from the second input, and a third processing position, at which the sample of the first vessel and/or the second vessel is aspiratable by the pipetting device. The provision of two different inputs allows to input different vessels with different priority for the processing or handling. The provision of a rotor significantly decreases the number of linear axes. Further, the provision of a rotational axis instead of linear axes is less expensive and simplifies the construction. The rotor allows to transfer the respective different vessels to the target positions without the transporting paths conflicting or obstructing each other. Thus, the first vessel may be transported from the first processing position to the third processing position or the second vessel may be transported from the second processing position to the third processing position without the necessity of complex moving paths. At the third processing position, the pipetting device may aspirate the sample from the first vessel and the second vessel, respectively.

The second input may be located at the rotor. Thus, an operator may load the second vessel directly into the second compartment of the rotor without any transporting device between the second input and the rotor.

The gripping device may be adapted to rock the first vessel and/or the second vessel. Thus, any samples of the first vessel and/or the second vessel may be suspended.

The gripping device may be moveable along a first axis. Thus, by means of a linear movement such as an upward or downward movement, the first vessel may be gripped so as to be transported to the rotor or *vice versa.*

The second compartment may be different from the first compartment. Thus, any mixing of the samples within the intended analysis or processing is prevented.

The rotor may be rotatable around a rotational axis, wherein the first compartment is located at a first angular position with respect to the rotational axis, wherein the second compartment is located at a second angular position with respect to the rotational axis, wherein the second angular position is different from the first angular position. Thus, the first compartment and the second compartment may be transferred to the respective processing positions by means of a simple rotational movement.

The second compartment may be separated from the first compartment. Thus, an unwanted loading of the second vessel into the first compartment by an operator may be prevented which also prevents a mixing of the respective samples within the analysis.

The second compartment may be separated from the first compartment by means of a separating wall. Thus, the first compartment is not exposable to an operator.

The second compartment may be located adjacent the first compartment. Thus, the respective processing positions are arranged close to one another which minimizes the time for transporting the respective vessels between the respective processing positions.

The pipetting device may be moveable along a second axis and along a third axis, wherein the third axis is different from the second axis. Thus, by means of a movement within a single plane, the pipetting device may process the samples from the respective vessels.

The third axis may be perpendicular to the second axis. Thus, moving paths of the pipetting device are rather simply controllable as two linear movements are well known to be controlled.

The second axis may be parallel to the first axis. Thus, the gripping device and the pipetting device may be moved parallel to one another which prevents any conflicts of the respective movement paths.

The pipetting device may be moveable along the first axis. Thus, the gripping device and the pipetting device may be moved on the same axis which minimizes the space required for operating the same.

The pipetting device is moveable together with the gripping device along the first axis. Thus, a single drive is sufficient to move the pipetting device and the gripping device.

The pipetting device may be adapted to dispense the sample of the first vessel and/or the second vessel at a processing station within the processing chamber. Thus, the operation of the pipetting device allows to further process the sample of the first vessel and/or the second vessel.

The processing station may be located spaced apart from the rotor. Thus, a movement of the processing station may be omitted as the samples are transported to the processing station by means of the rotor.

Alternatively, the processing station may be arranged on the rotor. Thus, the space required for the rotor and the processing station is minimized.

The rotor may be formed as a segment of a cylinder. Thus, the rotor does not obstruct the movement paths of the gripping device and the pipetting device.

The processing chamber may comprise a closure, wherein the closure is adapted to selectively expose or block the second input. Thus, an unwanted exposition of the second input during a processing of a vessel within the processing chamber may be prevented.

The first input comprises a transporting device for automatically transporting at least the first vessel. Thus, the first input may be automatically supplied with the first vessel.

The transporting device is linearly moveable. Thus, the first input may be automatically supplied with the first vessel by means of a simple linear movement of the transporting device.

The transporting device may be adapted to transport a rack, wherein the rack is adapted to receive a plurality of vessels. Thus, the first input may be automatically supplied with a plurality of vessels which increases the throughput of the apparatus.

The rotor may comprise a plurality of compartments for receiving a plurality of vessels. Thus, the throughput of the apparatus may be further increased. Further, the compartment may comprise compartments of different sizes which allows to process vessels of different sizes.

According to the present invention, a method for processing at least one sample using an apparatus as described before is disclosed. The method comprises:
inputting at least a first vessel into the processing chamber through the first input,
retrieving the first vessel from the first input by the gripping device,
rotating the rotor into the first processing position, at which the first vessel is transportable to the first compartment of the rotor by the gripping device,
transporting the first vessel to the first compartment of the rotor by the gripping device, optionally inputting at least a second vessel into the processing chamber through the second input, wherein the rotor is rotated into the second processing position, at which the second vessel is loadable into the second compartment of the rotor from the second input, if the second vessel is input, and
rotating the rotor into the third processing position, at which the sample of the first vessel and/or the second vessel is aspirated by the pipetting device.

The method may further comprise rocking the first vessel and/or the second vessel. The gripping device may be moved along a first axis. The pipetting device may be moved along a second axis and along a third axis, wherein the third axis is different from the second axis. The third axis may be perpendicular to the second axis. The second axis may be parallel to the first axis. Alternatively, the pipetting device may be moved along the first axis. For example, the pipetting device is moved together with the gripping device along the first axis. The method may further comprise dispensing the sample of the first vessel and/or the second vessel at a processing station within the processing chamber. The processing station may located spaced apart from the rotor or is arranged on the rotor. The method may further comprise automatically transporting at least the first vessel to the gripping device. The method may further comprise manually loading the second vessel into the second compartment from the second input.

Summarizing the findings of the present invention, the following embodiments are preferred:
Embodiment 1: Apparatus for processing at least one sample, comprising a processing chamber, a first input for inputting at least a first vessel into the processing chamber, a second input for inputting at least a second vessel into the processing chamber, wherein the second input is different from the first input, a rotor comprising at least a first compartment for receiving the first vessel from the first input and a second compartment for receiving the second vessel from the second input, a gripping device adapted to at least grip the first vessel and to transport the first vessel from the first input to the first compartment of the rotor, and a pipetting device adapted to at least pipette a sample from the first vessel and/or the second vessel, wherein the rotor is rotatable at least between a first processing position, at which the first vessel is transportable to the first compartment of the rotor by the gripping device, a second processing position, at which the second vessel is loadable into the second compartment of the rotor from the second input, and a third processing position, at which the sample of the first vessel and/or the second vessel is aspiratable by the pipetting device.
Embodiment 2: Apparatus according to the preceding embodiment, wherein the second input is located at the rotor.
Embodiment 3: Apparatus according to any preceding embodiment, wherein the gripping device is adapted to rock the first vessel and/or the second vessel.
Embodiment 4: Apparatus according to any preceding embodiment, wherein the gripping device is moveable along a first axis.
Embodiment 5: Apparatus according to any preceding embodiment, wherein the second compartment is different from the first compartment.
Embodiment 6: Apparatus according to the preceding embodiment, wherein the rotor is rotatable around a rotational axis, wherein the first compartment is located at a first angular position with respect to the rotational axis, wherein the second compartment is located at a second angular position with respect to the rotational axis, wherein the second angular position is different from the first angular position.
Embodiment 7: Apparatus according to any preceding embodiment, wherein the second compartment is separated from the first compartment.
Embodiment 8: Apparatus according to the preceding embodiment, wherein the second compartment is separated from the first compartment by means of a separating wall.
Embodiment 9: Apparatus according to the preceding embodiment, wherein the second compartment is located adjacent the first compartment.
Embodiment 10: Apparatus according to any preceding embodiment, wherein the pipetting device is moveable along a second axis and along a third axis, wherein the third axis is different from the second axis.
Embodiment 11: Apparatus according to the preceding embodiment, wherein the third axis is perpendicular to the second axis.
Embodiment 12: Apparatus according to any one of the two preceding embodiments, wherein the second axis is parallel to the first axis.
Embodiment 13: Apparatus according to any one of embodiments 4 to 9, wherein the pipetting device is moveable along the first axis.
Embodiment 14: Apparatus according to the preceding embodiment, wherein the pipetting device is moveable together with the gripping device along the first axis.
Embodiment 15: Apparatus according to any preceding embodiment, wherein the pipetting device is adapted to dispense the sample of the first vessel and/or the second vessel at a processing station within the processing chamber.
Embodiment 16: Apparatus according to the preceding embodiment, wherein the processing station is located spaced apart from the rotor or is arranged on the rotor.
Embodiment 17: Apparatus according to any preceding embodiment, wherein the rotor is formed as a segment of a cylinder.
Embodiment 18: Apparatus according to any preceding embodiment, wherein the processing chamber comprising a closure, wherein the closure is adapted to selectively expose or block the second input.
Embodiment 19: Apparatus according to any preceding embodiment, wherein the first input comprising a transporting device for automatically transporting at least the first vessel.
Embodiment 20: Apparatus according to the preceding embodiment, wherein the transporting device is linearly moveable.
Embodiment 21: Apparatus according to the preceding embodiment, wherein the transporting device is adapted to transport a rack, wherein the rack is adapted to receive a plurality of vessels.
Embodiment 22: Apparatus according to any preceding embodiment, wherein the rotor comprises a plurality of compartments for receiving a plurality of vessels.
Embodiment 23: Method for processing at least one sample using an apparatus according to any preceding embodiment, comprising
   - inputting at least a first vessel into the processing chamber through the first input,
   - retrieving the first vessel from the first input by the gripping device,
   - rotating the rotor into the first processing position, at which the first vessel is transportable to the first compartment of the rotor by the gripping device,
   - transporting the first vessel to the first compartment of the rotor by the gripping device,
   - optionally inputting at least a second vessel into the processing chamber through the second input, wherein the rotor is rotated into the second processing position, at which the second vessel is loadable into the second compartment of the rotor from the second input, if the second vessel is input, and
   - rotating the rotor into the third processing position, at which the sample of the first vessel and/or the second vessel is aspirated by the pipetting device.
Embodiment 24: Method according to the preceding embodiment, further comprising rocking the first vessel and/or the second vessel.
Embodiment 25: Method according to embodiment 23 or 24, wherein the gripping device is moved along a first axis.
Embodiment 26: Method according to the preceding embodiment, wherein the pipetting device is moved along a second axis and along a third axis, wherein the third axis is different from the second axis.
Embodiment 27: Method according to the preceding embodiment, wherein the third axis is perpendicular to the second axis.
Embodiment 28: Method according to any one of the two preceding embodiments, wherein the second axis is parallel to the first axis.
Embodiment 29: Method according to embodiment 25, wherein the pipetting device is moved along the first axis.
Embodiment 30: Method according to the preceding embodiment, wherein the pipetting device is moved together with the gripping device along the first axis.
Embodiment 31: Method according to any one of embodiments 23 to 30, further comprising dispensing the sample of the first vessel and/or the second vessel at a processing station within the processing chamber.
Embodiment 32: Method according to the preceding embodiment, wherein the processing station is located spaced apart from the rotor or is arranged on the rotor.
Embodiment 33: Method according to any one of embodiments 23 to 32, further comprising automatically transporting at least the first vessel to the gripping device.
Embodiment 34: Method according to any one of embodiments 23 to 33, further comprising manually loading the second vessel into the second compartment from the second input.

### Short description of the figures

Further Details of the invention may be derived from the following disclosure of preferred embodiments. The features of the embodiments may be realized in a isolated way or in any combination. The invention is not restricted to the embodiments. The embodiments are schematically depicted in the figures. Identical reference numbers in the figures refer to identical elements or functionally identical elements or elements corresponding to each other with regard to their functions.

In the figures:
Figure 1 shows a perspective view of an apparatus for processing at least one sample according to a first embodiment of the present invention in a first operation position;
Figure 2 shows a perspective view of a closure of the apparatus for processing at least one sample according to the first embodiment of the present invention in a first operation position;
Figure 3 shows a perspective view of the closure of the apparatus for processing at least one sample according to the first embodiment of the present invention in a second operation position;
Figures 4 -13 show perspective vies of the apparatus for processing at least one sample in different operation positions;
Figure 14 shows a perspective view of an apparatus for processing at least one sample according to a second embodiment of the present invention;
Figure 15 shows another perspective view of the apparatus for processing at least one sample according to the second embodiment of the present invention; and
Figure 16 shows another perspective view of the apparatus for processing at least one sample according to the second embodiment of the present invention.

### Detailed description of the embodiments

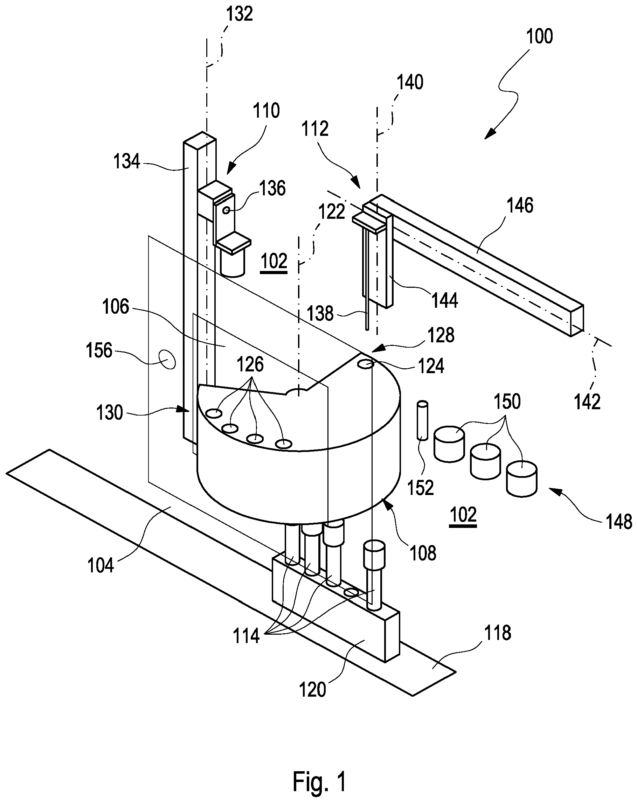

Figure 1 shows a perspective view of an apparatus 100 for processing at least one sample according to a first embodiment of the present invention. The apparatus 100 comprises a processing chamber 102, a first input 104 into the processing chamber 102, a second input 106 the processing chamber 102, a rotor 108, a gripping device 110, and a pipetting device 112. The rotor 108, the gripping device 110, and the pipetting device 112 are at least partially and preferably completely arranged within the processing chamber 102.

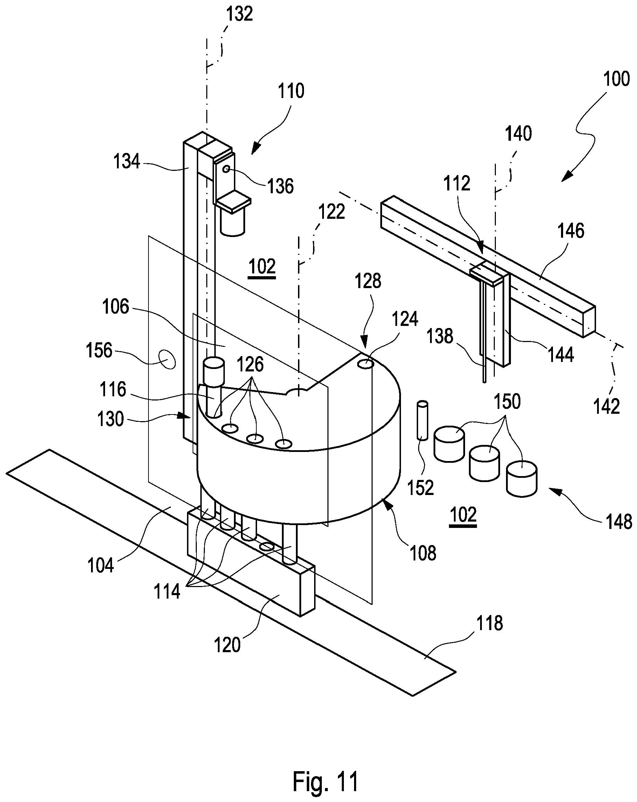

The first input 104 is adapted to allow inputting at least a first vessel 114 into the processing chamber 102. The second input 106 is adapted to allow inputting at least a second vessel 116 (Figure 11) into the processing chamber 102. The second input 106 is different from the first input 104. The first vessel 114 and the second vessel 116 are tubes. Each of the first vessel 114 and the second vessel 116 stores a sample therein. The second input 106 is located at the rotor 108. The first input 104 is spaced apart from the rotor 108. The first input 104 comprises a transporting device 118 for automatically transporting at least the first vessel 114. The transporting device 118 is linearly moveable. The transporting device 118 may be adapted to transport a rack 120. The rack 120 is adapted to receive a plurality of vessels, and more particularly a plurality of first vessels 114. Alternatively, the first vessels 114 may be provided in so-called single tube carriers. A single tube carrier is a device adapted to carry s single vessel which may be formed as a tube. Such single tube carriers may be transported in a row by means of the transporting device 118.

The rotor 108 is formed as a segment of a cylinder. The rotor 108 is rotatable around a rotational axis 122. The rotor 108 comprises at least a first compartment 124 for receiving the first vessel 114 from the first input 104 and a second compartment 126 for receiving the second vessel 116 from the second input 106. The first compartment 124 and the second compartment 126 are formed as depressions or blind holes. With other words, the first compartment 124 and the second compartment 126 extend into an interior of the rotor 108 and do not protrude therefrom. In order to avoid a mixing of the positions for the first vessel 114 and the second vessel 116 on the rotor 108, the second compartment 126 is different from the first compartment 124. In the present embodiment, the first compartment 124 is located at a first angular position 128 with respect to the rotational axis 122 and the second compartment 126 is located at a second angular position 130 with respect to the rotational axis 122. The second angular position 130 is different from the first angular position 128. For example, the first angular position 128 is spaced apart from the second angular position at 90° to 200° around the rotational axis 122 such as 180°. Thus, a loading of the second vessel 116 into the first compartment 124 by mistake is prevented. The rotor 108 is rotatable at least between a first processing position, at which the first vessel 114 is transportable to the first compartment 124 of the rotor 108 by the gripping device 110, a second processing position, at which the second vessel 116 is loadable into the second compartment 126 of the rotor 108 from the second input 106, and a third processing position, at which the sample of the first vessel 114 and/or the second vessel 116 is aspiratable by the pipetting device 112.

The gripping device 110 is adapted to at least grip the first vessel 114 and to transport the first vessel 114 from the first input 104 to the first compartment 124 of the rotor 108. For this purpose, the gripping device 110 is moveable along a first axis 132. The gripping device 110 is arranged on a first frame 134, which defines the first axis 132. The first frame 134 may comprise rails (not shown in detail) or the like, on which the gripping device 110 is moveable. More particularly, the gripping device 110 is moveable upwards and downwards along the first axis 132. The gripping device 110 is adapted to rock the first vessel 114. The so-called rocking process is a process where a vessel is rocked or shaken. Thus, a sample stored in the vessel will be suspended. For this purpose, the gripping device 110 is pivotally arranged on the first frame 134. For example, the gripping device 110 may be pivoted around a pivot 136. Alternatively or in addition, the gripping device 110 is adapted to rock the second vessel 116.

The pipetting device 112 is at least adapted to pipette a sample from the first vessel 114 and/or the second vessel 116. The pipetting process of the pipetting device 112 includes an aspirating process and a dispensing process of the sample. For this purpose, the pipetting device 112 comprises a pipetting needle 138. The pipetting device 112 is moveable along a second axis 140 and along a third axis 142. The third axis 142 is different from the second axis 140. In the present embodiment, the third axis 142 is perpendicular to the second axis 140. Further, the second axis 140 is parallel to the first axis 132. The pipetting device 112 is arranged on a second frame 144, which defines the second axis 140. The second frame 144 may comprise rails (not shown in detail) or the like, on which the pipetting device 112 is moveable. More particularly, the pipetting device 112 is moveable upwards and downwards along the second axis 140. The second frame 144 in turn is moveably arranged on a third frame 146, which defines the third axis 142. The third frame 146 may comprise rails (not shown in detail) or the like, on which the second frame 144 is moveable. More particularly, the second frame 144 is moveable to the leftwards and rightwards along the third axis 142. Thus, the pipetting device 112 may be moved within a plane defined by the second axis 140 and the third axis 142.

The apparatus 100 further comprises a processing station 148. The processing station 148 is arranged within the processing chamber 102. In this embodiment, the processing station 148 is located spaced apart from the rotor 108. The processing station 148 is arranged within the operating range of the pipetting device 112. The pipetting device 112 is adapted to dispense the sample of the first vessel 114 and/or the second vessel 116 at the processing station 148. In the present embodiment, the processing station 148 comprises three mixing chambers 150 and a washing station 152 for washing the pipetting needle 138. The mixing chambers 150 are provided to be used within an analysis or any other processing of the sample from the first vessel 114 and/or the second vessel 116. For this purpose, the pipetting device 112 may dispense the sample from the first vessel 114 and/or the second vessel 116 to the mixing chambers 150. For example, the pipetting device 112 may evenly distribute the sample from the first vessel 114 and/or the second vessel 116 to the mixing chambers 150. The mixing chambers 150 may include a reagent or the like which is used for the analysis or any other processing of the sample.

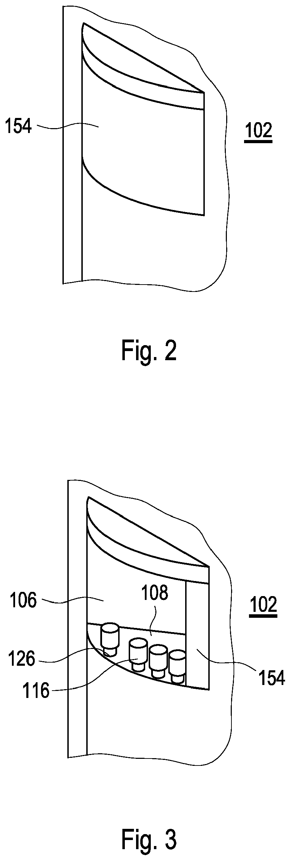

Figure 2 shows a perspective view of a closure 154 of the apparatus 100 for processing at least one sample according to the first embodiment of the present invention in a first operation position. More particularly, the processing chamber 102 comprises the closure 154. The closure 154 is adapted to selectively expose or block the second input 106. The processing chamber 102 comprises a button 156 for activating the closure 154. The button is located at an outer surface thereof. In the first operation position, the closure 154 blocks the second input 106. Thus, an operator may not load the second vessel 116 into the second compartment 126 of the rotor 108.

Figure 3 shows a perspective view of the closure 154 of the apparatus 100 for processing at least one sample according to the first embodiment of the present invention in a second operation position. In the second operation position, the closure 154 exposes the second input 106. Thus, an operator may load the second vessel 116 into the second compartment 126 of the rotor 108. The closure 154 is moved between the first operation position and the second operation position by pressing the button 156. Normally, the closure 154 is in the first operation position so as to block the second input 106, which prevents an operator from access to the second input 106 during an operation of the apparatus 100. If the operator presses the button 156, the closure 154 moves into the second operation position so as to expose the second input 106, which allows an operator to access the second input 106. For safety reasons, the closure 154 is moved into the second operation position only if the operation of the apparatus 100 allows to, such as between the processing of two subsequent samples. With other words, the operator is allowed to input the second vessel 116 only at suitable points in time of an operation of the apparatus 100.

The operation of the apparatus 100 will be described hereinafter with reference to Figures 1 to 13. The apparatus 100 is used to process at least one sample. Figure 1 shows a perspective view of the apparatus 100 in an operation position at the beginning. An operator of the apparatus 100 loads at least one first vessel 114 into the rack 120. The at least one first vessel 114 comprises a first sample. The first sample may be whole blood. As shown in Figure 1, the rack 120 may be used to be loaded with a plurality of first vessels 114.

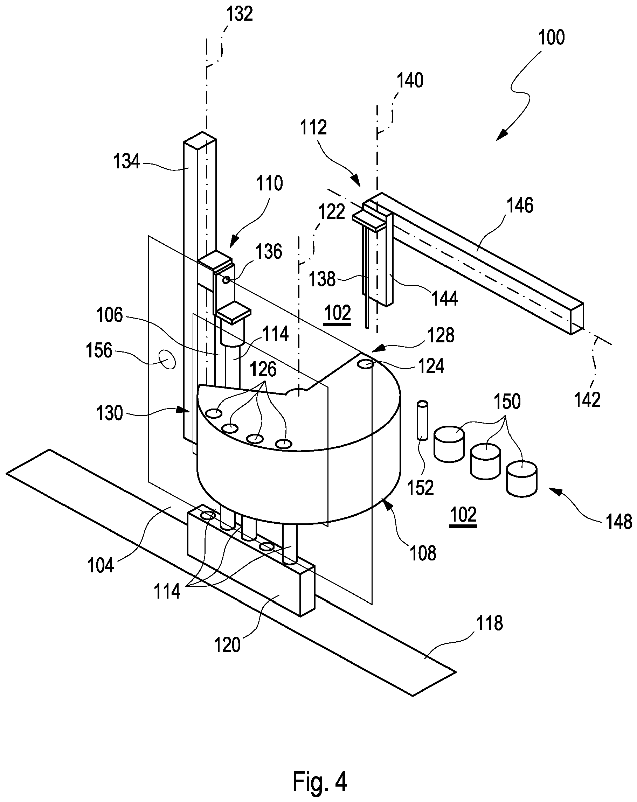

Figure 4 shows a perspective view of the apparatus 100 in a subsequent operation position. After the rack 120 is loaded with the at least one first vessel 114, the rack 120 is forwarded to the transporting device 118 at the first input 104. Then, the operator activates the apparatus 100, for example by pressing a start button (not shown in detail). Then, the transporting device 118 transports the rack 120 including the at least one first vessel 114 into the processing chamber 102 at a position where the rack 120 is in the operating range of the gripping device 110. The gripping device 110 is moved downwards along the first axis 132 so as to retrieve the at least one first vessel 114 from the first input 104 and grips the at least one first vessel 114.

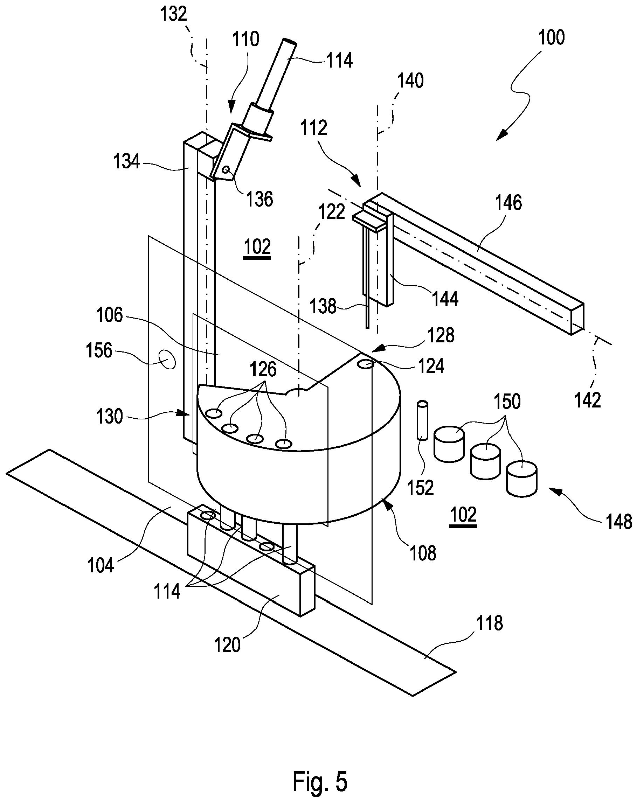

Figure 5 shows a perspective view of the apparatus 100 in a subsequent operation position. The gripping device 110 is moved upwards along the first axis 132 and rocks the first vessel 114.

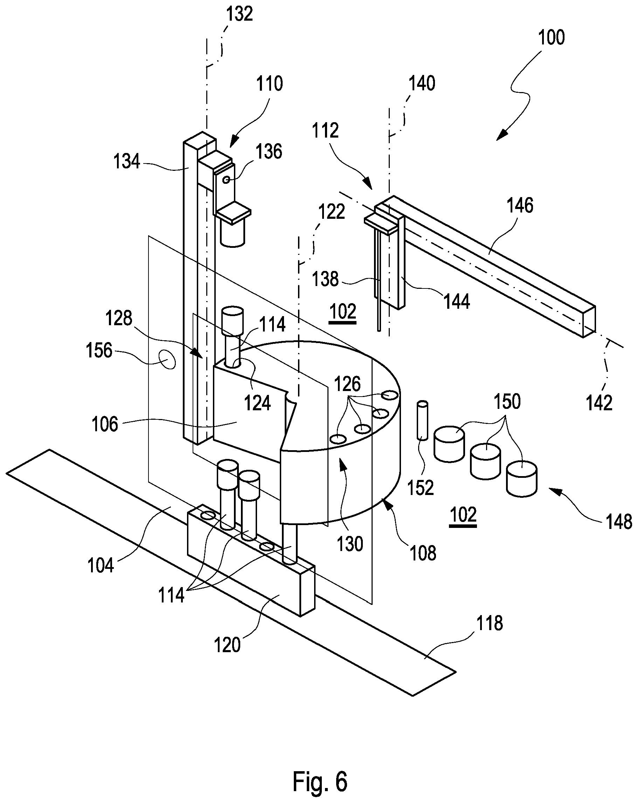

Figure 6 shows a perspective view of the apparatus 100 in a subsequent operation position. The rotor 108 is rotated into the first processing position. Thereafter, the gripping device 110 transports the first vessel 114 to the first compartment 124 and loads the first vessel 114 therein.

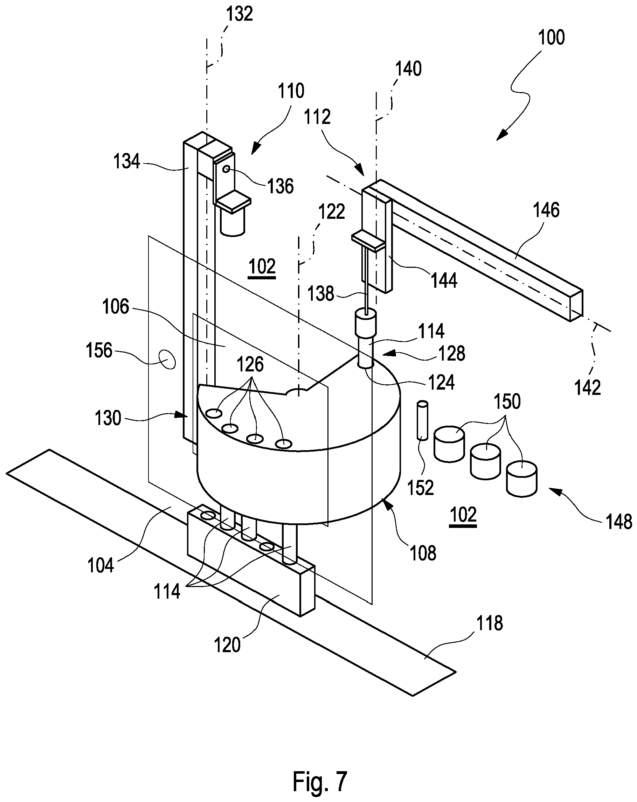

Figure 7 shows a perspective view of the apparatus 100 in a subsequent operation position. The rotor 108 is rotated into the third processing position such that the first vessel 114 is located in the operating range of the pipetting device 112. The pipetting device 112 is moved downwards along the second axis 140 and aspirates the first sample.

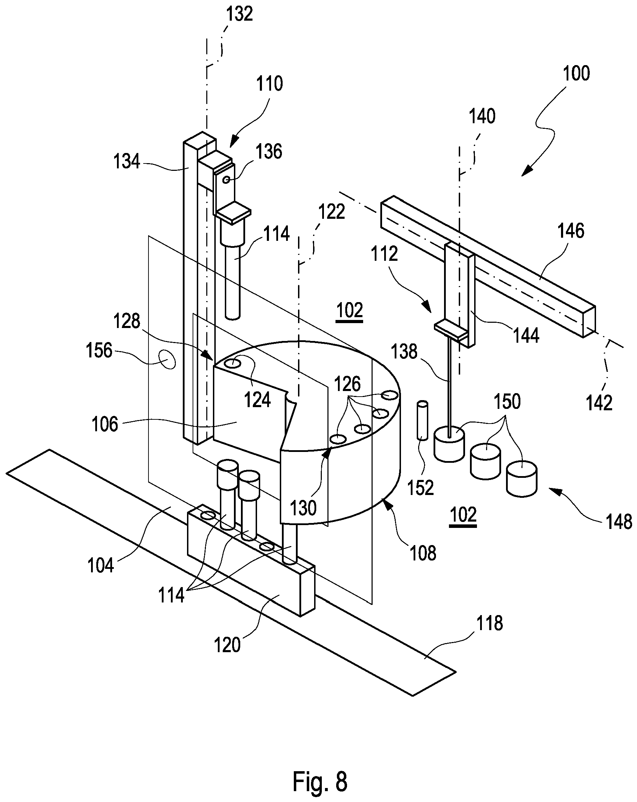

Figure 8 shows a perspective view of the apparatus 100 in a subsequent operation position. Thereafter, the pipetting device 112 is moved upwards along the second axis 140 and along the third axis 142. Thereby, the pipetting device 112 is moved to the processing station 148. In the processing station 148, the pipetting device 112 is moved downwards along the second axis 140 so as to insert the pipetting needle 138 into the washing station 152. Then, the pipetting device 112 is moved upwards and downwards along the second axis 140 and laterally along the third axis 142 so as to dispense the first sample into the mixing chambers 150. The rotor 108 is rotated back into the first processing position and the gripping device 110 grips the first vessel 114 from the first compartment 124.

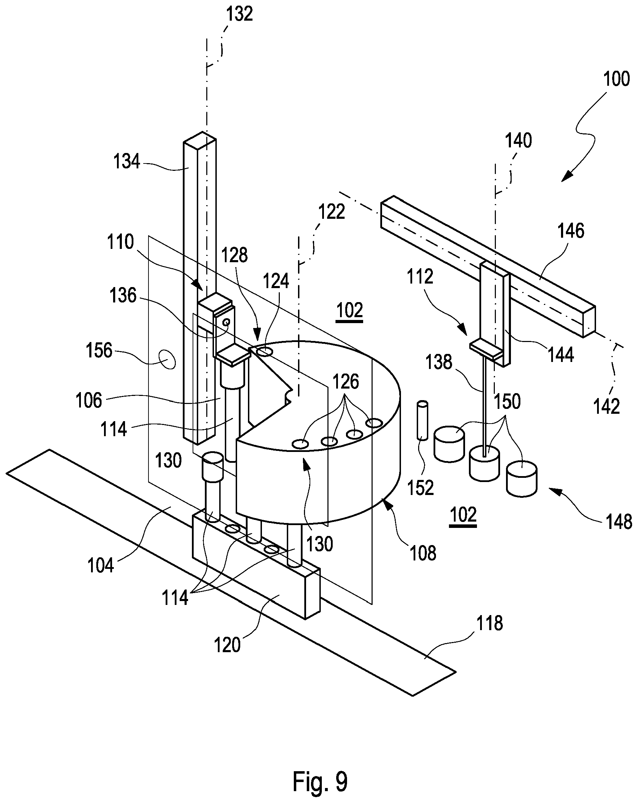

Figure 9 shows a perspective view of the apparatus 100 in a subsequent operation position. The gripping device 110 loads the first vessel 114 back into the rack 120 while the pipetting device 112 dispenses the first sample into the respective mixing chambers 150. The transporting device 118 transports the rack 120 one position further. The gripping device 110 retrieves a subsequent or second one of the first vessels 114 from the first input 104 and grips the at least one first vessel 114. This subsequent or second one of the first vessels 114 is process as described before. Needless to say, all of the first vessels 114 supplied within the rack 120 may be process as described before.

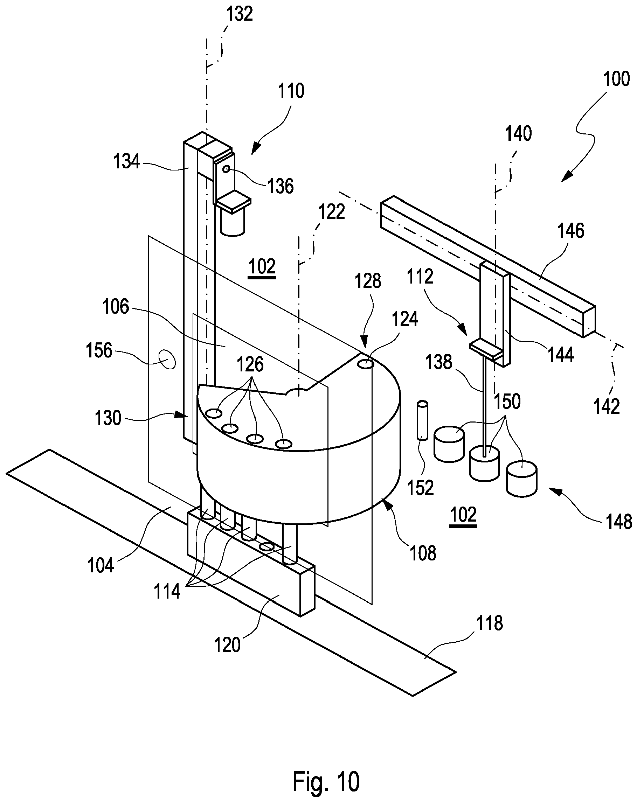

Figure 10 shows a perspective view of the apparatus 100 in a further operation position. As the case may be, the operator may want to process a second sample stored in the second vessel 116. The second sample may be process as will be described in further detail hereinafter. The apparatus may start to process the second sample while the first sample from one of the first vessels 114 has not been finished to be process. For example, as indicated in Figure 11, the apparatus 100 may start to process the second sample while the pipetting device 112 dispenses the first sample into the respective mixing chambers 150. If the operator wants to process a second sample stored in the second vessel 116, the operator presses the button 156 such that the closure 154 exposes the second input 106. During the processing of the first sample at the processing station 148, the rotor 108 is rotated into the second processing position. In the second processing position, the second vessel 116 is loadable into the second compartment 126 from the second input 106. Particularly, the second vessel 116 is manually loadable into the second compartment 126 from the second input 106 by the operator. It is to be noted that the second sample stored in the second vessel 116 is manually resuspended as the ingredients of whole blood sediment fast. Thus, a rocking of the second sample may be omitted.

Figure 11 shows a perspective view of the apparatus 100 in a subsequent operation position. Figure 11 shows the second vessel 116 manually loaded into the second compartment 126 by the operator while the first sample from the first vessel 114 is dispensed into the mixing chambers 150 by the pipetting device 112. If all of the first sample is dispensed into the mixing chambers 150, the pipetting device 112 is moved again to the washing station 152 so as to wash the pipetting needle 138.

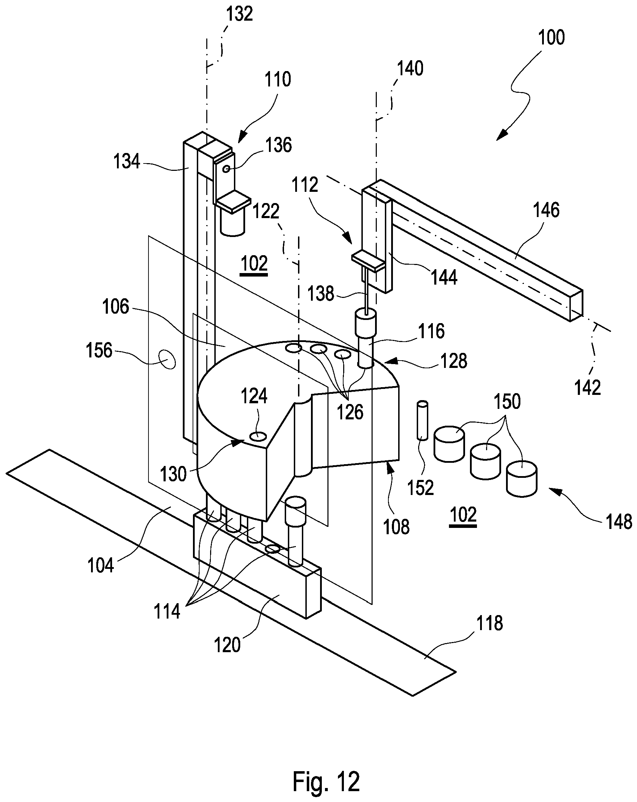

Figure 12 shows a perspective view of the apparatus 100 in a subsequent operation position. The rotor 108 is rotated into the third processing position such that the pipetting device 112 may aspirate the second sample from the second vessel 116 in a manner identical to the operation with the first sample described before.

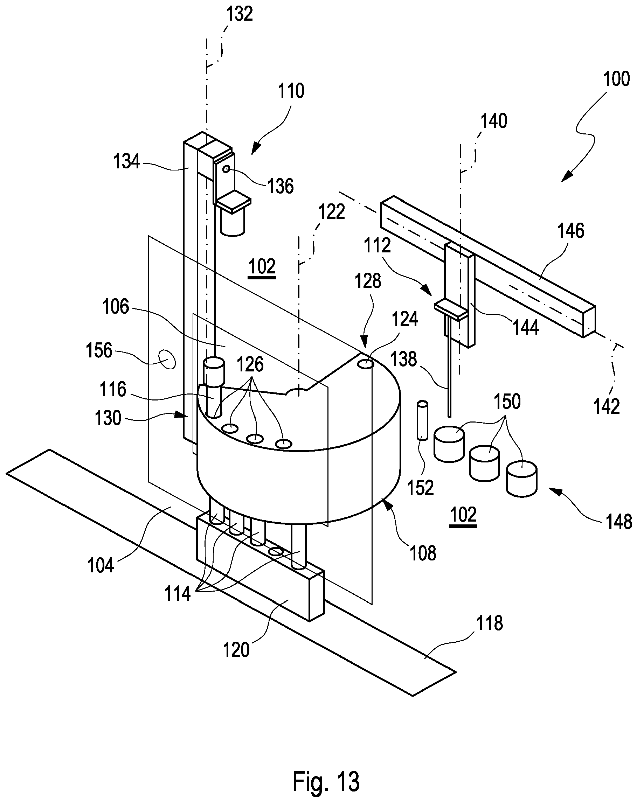

Figure 13 shows a perspective view of the apparatus 100 in a subsequent operation position. The second sample 116 is then processed by the pipetting device 112 similarly to the first sample, *i.e.* dispensed into the mixing chambers 150. Further, the rotor 108 is rotated back into the second processing position such the operator may remove the second vessel 116 from the second compartment 126. Needless to say, the operator may wish to process more than one second vessel 116 such that the rotor 108 may comprise a plurality of second compartments 126 even though the number of second compartments 126 should not be too high as particularly ingredients of whole blood sediment fast. After the second sample is processed in the processing station 148, the apparatus 100 further processes any samples introduced through the first input 104 and provided by the rack 120.

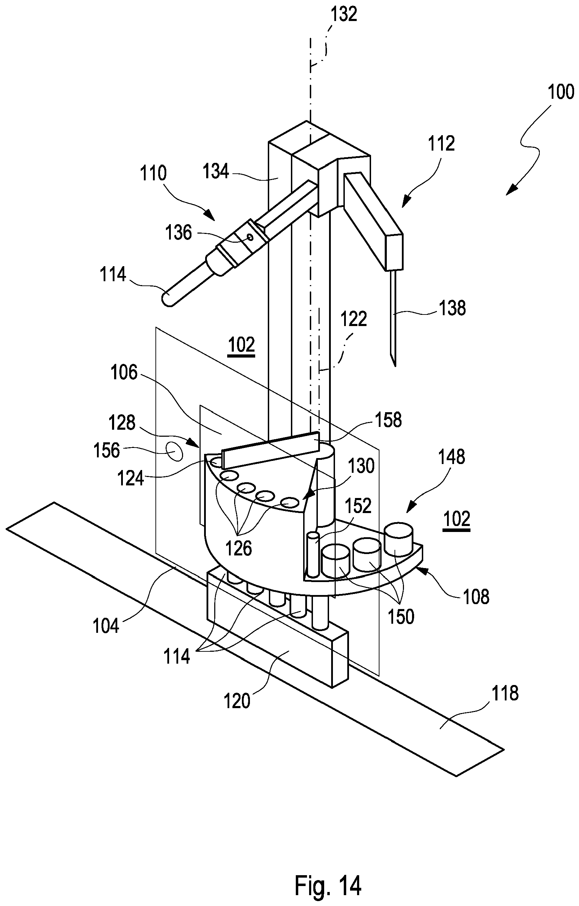

Figure 14 shows a perspective view of an apparatus 100 for processing at least one sample according to a second embodiment of the present invention. Hereinafter, only the differences from the first embodiment will be described and like constructional members are indicated by like reference numbers. According to the second embodiment, the pipetting device 112 is arranged at the first frame 134 so as to be movable along the first axis 132. The pipetting device 112 is movable together with a gripping device 110 along the first axis 132. The second compartment 126 is separated from the first compartment 124 by means of a separating wall 158. The rotor 108 of the second embodiment is smaller if seen in a circumferential direction around the rotational axis 122 if compared to the rotor 108 of the first embodiment. Further, the processing station 148 is arranged on the rotor 108.

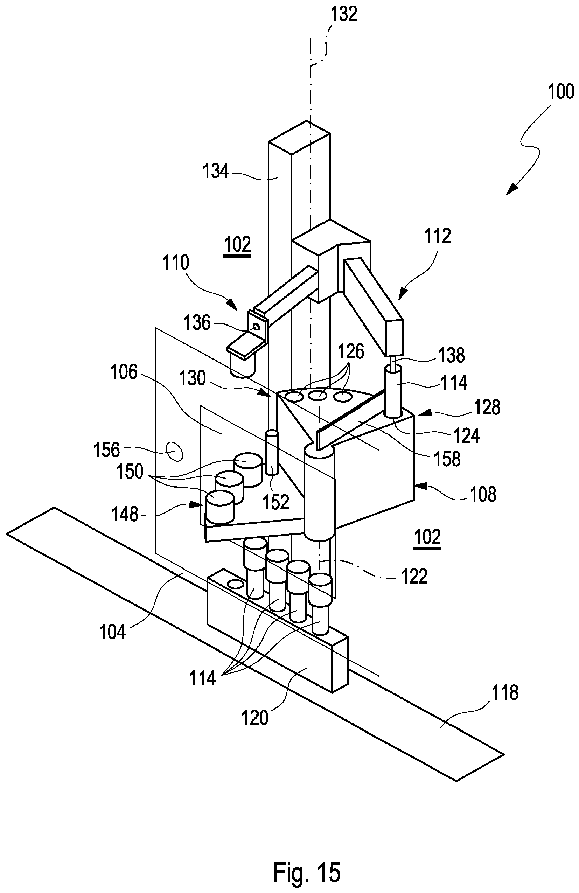

Figure 15 shows another perspective view of the apparatus 100 for processing at least one sample according to the second embodiment of the present invention. As shown in Figure 15, the pipetting device 112 may aspirate a sample from the first vessel 114 being loaded into the first compartment 124.

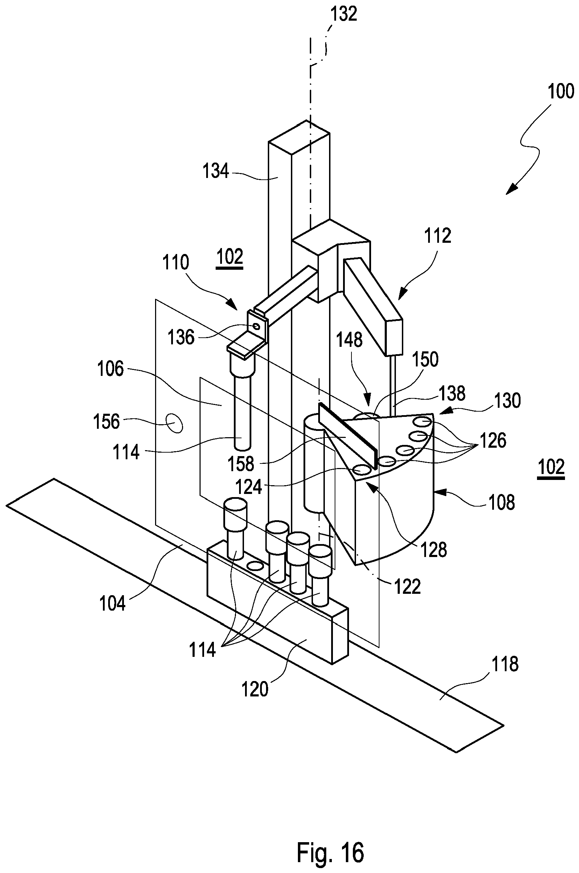

Figure 16 shows another perspective view of the apparatus 100 for processing at least one sample according to the second embodiment of the present invention. As shown in Figure 16, while the pipetting device 112 dispenses the sample from the first vessel 114 into the mixing chambers 150 of the processing station 148, the gripping device 110 may grip a further first vessel 114 from the rack 120.

The operation principle is basically the same as with the first embodiment except for the common movement of the gripping device 110 and the pipetting device 112 as will be explained in further detail below. The operation of the apparatus 100 will be described hereinafter with reference to Figures 14 to 16. As shown in Figure 14, the rack 120 may be used to be loaded with a plurality of first vessels 114. After the rack 120 is loaded with the at least one first vessel 114, the rack 120 is forwarded to the transporting device 118 of the first input 104. Then, the operator activates the apparatus 100, for example by pressing a start button (not shown in detail). Then, the transporting device 118 transports the rack 120 including the at least one first vessel 114 into the processing chamber 102 at a position where the rack 120 is in the operating range of the gripping device 110. The rotor 108 is rotated into the first processing position. The gripping device 110 and the pipetting device 112 are moved downwards along the first axis 132. The gripping device 110 grips the at least one first vessel 114. Then, the gripping device 110 and the pipetting device 112 are moved upwards along the first axis 132. The gripping device 110 rocks the first vessel 114. Thereafter, the gripping device 110 transports the first vessel 114 to the first compartment 124 and loads the first vessel 114 therein. Then, the rotor 108 is rotated into the third processing position such that the first vessel 114 is located in the operating range of the pipetting device 112. The gripping device 110 and the pipetting device 112 are moved downwards along the first axis 132. The pipetting device 112 aspirates the first sample. Thereafter, the gripping device 110 and the pipetting device 112 are moved upwards along the first axis 132. The rotor 108 is rotated such that the processing station 148 is move into the operating range of the pipetting device 112. Subsequently, the gripping device 110 and pipetting device 112 are moved downwards and upwards in a repeated manner along the first axis 132 so as to insert the pipetting needle 138 into the washing station 152 to dispense the first sample into the mixing chambers 150. During the repeated downwards and upwards movements of the gripping device 110 and the pipetting device 112, the rotor 108 is rotated further step by step so as to move the washing station 152 and the mixing chambers 150 into the operating range of the pipetting device 112 as the washing station 152 and the mixing chambers 150 are arranged on a circular path around the rotational axis 122 on the rotor 108. Further, during these repeated downwards and upwards movements of the gripping device 110 and the pipetting device 112, the gripping device 110 may grip the next first vessel 114 and rock the same. The rotor 108 of the second embodiment is smaller if seen in a circumferential direction around the rotational axis 122 if compared to the rotor 108 of the first embodiment in order to prevent any collision of the gripping device 110 and the pipetting device 112 with the rotor 108 during the movements thereof.

As the case may be, the operator may want to process a second sample stored in the second vessel 116. If this is the case, the operator presses the button 156 such that the closure 154 exposes the second input 106. The processing of the second sample stored in the second vessel 116 is the same as with the first embodiment such that the description thereof is omitted.

### List of reference numbers

- 100: apparatus
- 102: processing chamber
- 104: first input
- 106: second input
- 108: rotor
- 110: gripping device
- 112: pipetting device
- 114: first vessel
- 116: second vessel
- 118: transporting device
- 120: rack
- 122: rotational axis
- 124: first compartment
- 126: second compartment
- 128: first angular position
- 130: second angular position
- 132: first axis
- 134: first frame
- 136: pivot
- 138: pipetting needle
- 140: second axis
- 142: third axis
- 144: second frame
- 146: third frame
- 148: processing station
- 150: mixing chamber
- 152: washing station
- 154: closure
- 156: button
- 158: separating wall

## Claims

1. Apparatus (100) for processing at least one sample, comprising a processing chamber (102), a first input (104) for inputting at least a first vessel (114) into the processing chamber (102), a second input (106) for inputting at least a second vessel (116) into the processing chamber (102), wherein the second input (106) is different from the first input (104), a rotor (108) comprising at least a first compartment (124) for receiving the first vessel (114) from the first input (104) and a second compartment (126) for receiving the second vessel (116) from the second input (106), a gripping device (110) adapted to at least grip the first vessel (114) and to transport the first vessel (114) from the first input (104) to the first compartment (124) of the rotor (108), and a pipetting device (112) adapted to at least pipette a sample from the first vessel (114) and/or the second vessel (116), wherein the rotor (108) is rotatable at least between a first processing position, at which the first vessel (114) is transportable to the first compartment (124) of the rotor (108) by the gripping device (110), a second processing position, at which the second vessel (116) is loadable into the second compartment (126) of the rotor (108) from the second input (106), and a third processing position, at which the sample of the first vessel (114) and/or the second vessel (116) is aspiratable by the pipetting device (112).

2. Apparatus (100) according to the preceding claim, wherein the second input (106) is located at the rotor (108).

3. Apparatus (100) according to any preceding claim, wherein the gripping device (110) is adapted to rock the first vessel (114) and/or the second vessel (116).

4. Apparatus (100) according to any preceding claim, wherein the gripping device (110) is moveable along a first axis (132).

5. Apparatus (100) according to any preceding claim, wherein the second compartment (126) is different from the first compartment (124).

6. Apparatus (100) according to the preceding claim, wherein the rotor (108) is rotatable around a rotational axis (122), wherein the first compartment (124) is located at a first angular position (128) with respect to the rotational axis (122), wherein the second compartment (126) is located at a second angular position (130) with respect to the rotational axis (122), wherein the second angular position (130) is different from the first angular position (128).

7. Apparatus (100) according to any preceding claim, wherein the second compartment (126) is separated from the first compartment (124).

8. Apparatus (100) according to the preceding claim, wherein the second compartment (126) is separated from the first compartment (124) by means of a separating wall (158).

9. Apparatus (100) according to the preceding claim, wherein the pipetting device (112) is moveable together with the gripping device (110) along the first axis (132).

10. Apparatus (100) according to any preceding claim, wherein the rotor (108) is formed as a segment of a cylinder.

11. Apparatus (100) according to any preceding claim, wherein the processing chamber (102) comprising a closure (154), wherein the closure (154) is adapted to selectively expose or block the second input (106).

12. Apparatus (100) according to any preceding claim, wherein the first input (104) comprising a transporting device (118) for automatically transporting at least the first vessel (114).

13. Method for processing at least one sample using an apparatus (100) according to any preceding claim, comprising
- inputting at least a first vessel (114) into the processing chamber (102) through the first input (104),
- retrieving the first vessel (114) from the first input (104) by the gripping device (110),
- rotating the rotor (108) into the first processing position, at which the first vessel (114) is transportable to the first compartment (124) of the rotor (108) by the gripping device (110),
- transporting the first vessel (114) to the first compartment (124) of the rotor (108) by the gripping device (110),
- optionally inputting at least a second vessel (116) into the processing chamber (102) through the second input (106), wherein the rotor (108) is rotated into the second processing position, at which the second vessel (116) is loadable into the second compartment (126) of the rotor (108) from the second input (106), if the second vessel (116) is input, and
- rotating the rotor (108) into the third processing position, at which the sample of the first vessel (114) and/or the second vessel (116) is aspirated by the pipetting device (112).

14. Method according to the preceding claim, further comprising rocking the first vessel (114) and/or the second vessel (116).

15. Method according to any one of claims 13 to 14, further comprising manually loading the second vessel (116) into the second compartment (126) from the second input (106).

## Patentansprüche

1. Einrichtung (100) zum Verarbeiten von mindestens einer Probe, umfassend eine Verarbeitungskammer (102), eine erste Zuführung (104) zum Zuführen von mindestens einem ersten Gefäß (114) in die Verarbeitungskammer (102), eine zweite Zuführung (106) zum Zuführen von mindestens einem zweiten Gefäß (116) in die Verarbeitungskammer (102), wobei die zweite Zuführung (106) von der ersten Zuführung (104) verschieden ist, einen Drehzylinder (108), umfassend mindestens ein erstes Fach (124) zum Aufnehmen des ersten Gefäßes (114) aus der ersten Zuführung (104) und ein zweites Fach (126) zum Aufnehmen des zweiten Gefäßes (116) aus der zweiten Zuführung (106), eine Greifvorrichtung (110), die angepasst ist, um das erste Gefäß (114) mindestens zu greifen und das erste Gefäß (114) von der ersten Zuführung (104) zum ersten Fach (124) des Drehzylinders (108) zu transportieren, und eine Pipettierungsvorrichtung (112), die angepasst ist, um eine Probe aus dem ersten Gefäß (114) und/oder dem zweiten Gefäß (116) mindestens zu pipettieren, wobei der Drehzylinder (108) mindestens zwischen einer ersten Verarbeitungsstellung, in der das erste Gefäß (114) zum ersten Fach (124) des Drehzylinders (108) durch die Greifvorrichtung (110) transportierbar ist, einer zweiten Verarbeitungsstellung, in der das zweite Gefäß (116) in das zweite Fach (126) des Drehzylinders (108) aus der zweiten Zuführung (106) ladbar ist, und einer dritten Verarbeitungsstellung, in der die Probe des ersten Gefäßes (114) und/oder des zweiten Gefäßes (116) durch die Pipettierungsvorrichtung (112) absaugbar ist, drehbar ist.

2. Einrichtung (100) nach dem vorhergehenden Anspruch, wobei die zweite Zuführung (106) am Drehzylinder (108) angeordnet ist.

3. Einrichtung (100) nach einem vorhergehenden Anspruch, wobei die Greifvorrichtung (110) angepasst ist, um das erste Gefäß (114) und/oder das zweite Gefäß (116) zu schütteln.

4. Einrichtung (100) nach einem vorhergehenden Anspruch, wobei die Greifvorrichtung (110) entlang einer ersten Achse (132) bewegbar ist.

5. Einrichtung (100) nach einem vorhergehenden Anspruch, wobei das zweite Fach (126) von dem ersten Fach (124) verschieden ist.

6. Einrichtung (100) nach dem vorhergehenden Anspruch, wobei der Drehzylinder (108) um eine Drehachse (122) drehbar ist, wobei das erste Fach (124) in einer ersten Winkelstellung (128) bezogen auf die Drehachse (122) angeordnet ist, wobei das zweite Fach (126) in einer zweiten Winkelstellung (130) bezogen auf die Drehachse (122) angeordnet ist, wobei die zweite Winkelstellung (130) von der ersten Winkelstellung (128) verschieden ist.

7. Einrichtung (100) nach einem vorhergehenden Anspruch, wobei das zweite Fach (126) von dem ersten Fach (124) getrennt ist.

8. Einrichtung (100) nach dem vorhergehenden Anspruch, wobei das zweite Fach (126) von dem ersten Fach (124) mittels einer Trennwand (158) getrennt ist.

9. Einrichtung (100) nach dem vorhergehenden Anspruch, wobei die Pipettierungsvorrichtung (112) zusammen mit der Greifvorrichtung (110) entlang der ersten Achse (132) bewegbar ist.

10. Einrichtung (100) nach einem vorhergehenden Anspruch, wobei der Drehzylinder (108) als ein Segment eines Zylinders ausgebildet ist.

11. Einrichtung (100) nach einem vorhergehenden Anspruch, wobei die Verarbeitungskammer (102) ein Verschlusselement (154) umfasst, wobei das Verschlusselement (154) angepasst ist, die zweite Zuführung (106) gezielt freizulegen oder zu sperren.

12. Einrichtung (100) nach einem vorhergehenden Anspruch, wobei die erste Zuführung (104) eine Transportvorrichtung (118) zum automatischen Transportieren von mindestens dem ersten Gefäß (114) umfasst.

13. Verfahren zum Verarbeiten von mindestens einer Probe unter Verwendung einer Einrichtung (100) nach einem vorhergehenden Anspruch, Folgendes umfassend:
Zuführen von mindestens einem ersten Gefäß (114) in die Verarbeitungskammer (102) durch die erste Zuführung (104) hindurch,
Abholen des ersten Gefäßes (114) aus der ersten Zuführung (104) durch die Greifvorrichtung (110),
Drehen des Drehzylinders (108) in die erste Verarbeitungsstellung, in der das erste Gefäß (114) zum ersten Fach (124) des Drehzylinders (108) durch die Greifvorrichtung (110) transportierbar ist,
Transportieren des ersten Gefäßes (114) zum ersten Fach (124) des Drehzylinders (108) durch die Greifvorrichtung (110),
gegebenenfalls Zuführen von mindestens einem zweiten Gefäß (116) in die Verarbeitungskammer (102) durch die zweite Zuführung (106) hindurch, wobei der Drehzylinder (108) in die zweite Verarbeitungsstellung gedreht wird, in der das zweite Gefäß (116) in das zweite Fach (126) des Drehzylinders (108) aus der zweiten Zuführung (106) ladbar ist, wenn das zweite Gefäß (116) zugeführt wird, und
Drehen des Drehzylinders (108) in die dritte Verarbeitungsstellung, in der die Probe des ersten Gefäßes (114) und/oder des zweiten Gefäßes (116) von der Pipettierungsvorrichtung (112) abgesaugt wird.

14. Verfahren nach dem vorhergehenden Anspruch, ferner umfassend Schütteln des ersten Gefäßes (114) und/oder des zweiten Gefäßes (116).

15. Verfahren nach einem der Ansprüche 13 bis 14, ferner umfassend manuelles Laden des zweiten Gefäßes (116) in das zweite Fach (126) aus der zweiten Zuführung (106).

## Revendications

1. Appareil (100) pour traiter au moins un échantillon, comprenant une chambre de traitement (102), une première entrée (104) pour introduire au moins un premier récipient (114) dans la chambre de traitement (102), une deuxième entrée (106) pour introduire au moins un deuxième récipient (116) dans la chambre de traitement (102), la deuxième entrée (106) étant différente de la première entrée (104), un rotor (108) comprenant au moins un premier compartiment (124) pour recevoir le premier récipient (114) à partir de la première entrée (104) et un deuxième compartiment (126) pour recevoir le deuxième récipient (116) à partir de la deuxième entrée (106), un dispositif de saisie (110) adapté au moins pour saisir le premier récipient (114) et pour transporter le premier récipient (114) de la première entrée (104) au premier compartiment (124) du rotor (108), et un dispositif de pipetage (112) adapté au moins pour pipetter un échantillon à partir du premier récipient (114) et/ou du deuxième récipient (116), le rotor (108) pouvant tourner au moins entre une première position de traitement, au niveau de laquelle le premier récipient (114) peut être transporté au premier compartiment (124) du rotor (108) par le dispositif de saisie (110), une deuxième position de traitement, au niveau de laquelle le deuxième récipient (116) peut être chargé dans le deuxième compartiment (126) du rotor (108) à partir de la deuxième entrée (106), et une troisième position de traitement, au niveau de laquelle l'échantillon du premier récipient (114) et/ou du deuxième récipient (116) peut être aspiré par le dispositif de pipetage (112).

2. Appareil (100) selon la revendication précédente, la deuxième entrée (106) étant située sur le rotor (108).

3. Appareil (100) selon n'importe quelle revendication précédente, le dispositif de préhension (110) étant adapté pour balancer le premier récipient (114) et/ou le deuxième récipient (116).

4. Appareil (100) selon n'importe quelle revendication précédente, le dispositif de préhension (110) étant mobile le long d'un premier axe (132).

5. Appareil (100) selon n'importe quelle revendication précédente, le deuxième compartiment (126) étant différent du premier compartiment (124).

6. Appareil (100) selon la revendication précédente, le rotor (108) pouvant tourner autour d'un axe de rotation (122), le premier compartiment (124) étant situé à une première position angulaire (128) par rapport à l'axe de rotation (122), le deuxième compartiment (126) étant situé à une deuxième position angulaire (130) par rapport à l'axe de rotation (122), la deuxième position angulaire (130) étant différente de la première position angulaire (128).

7. Appareil (100) selon n'importe quelle revendication précédente, le deuxième compartiment (126) étant séparé du premier compartiment (124).

8. Appareil (100) selon la revendication précédente, le deuxième compartiment (126) étant séparé du premier compartiment (124) au moyen d'une paroi de séparation (158).

9. Appareil (100) selon la revendication précédente, le dispositif de pipetage (112) étant mobile avec le dispositif de préhension (110) le long du premier axe (132).

10. Appareil (100) selon n'importe quelle revendication précédente, le rotor (108) étant formé comme un segment d'un cylindre.

11. Appareil (100) selon n'importe quelle revendication précédente, la chambre de traitement (102) comprenant une fermeture (154), la fermeture (154) étant adaptée pour exposer ou bloquer sélectivement la deuxième entrée (106).

12. Appareil (100) selon n'importe quelle revendication précédente, la première entrée (104) comprenant un dispositif de transport (118) pour transporter automatiquement au moins le premier récipient (114).

13. Procédé de traitement d'au moins un échantillon à l'aide d'un appareil (100) selon n'importe quelle revendication précédente, comprenant :
- l'introduction d'au moins un premier récipient (114) dans la chambre de traitement (102) par la première entrée (104),
- la récupération du premier récipient (114) à partir de la première entrée (104) par le dispositif de préhension (110),
- la rotation du rotor (108) dans la première position de traitement, au niveau de laquelle le premier récipient (114) peut être transporté dans le premier compartiment (124) du rotor (108) par le dispositif de préhension (110),
- le transport du premier récipient (114) au premier compartiment (124) du rotor (108) par le dispositif de préhension (110),
- l'introduction facultative d'au moins un deuxième récipient (116) dans la chambre de traitement (102) par la deuxième entrée (106), le rotor (108) étant tourné dans la deuxième position de traitement, dans laquelle le deuxième récipient (116) peut être chargé dans le deuxième compartiment (126) du rotor (108) à partir de la deuxième entrée (106), si le deuxième récipient (116) est introduit, et
- la rotation du rotor (108) dans la troisième position de traitement, au niveau de laquelle l'échantillon du premier récipient (114) et/ou du deuxième récipient (116) est aspiré par le dispositif de pipetage (112).

14. Procédé selon la revendication précédente, comprenant en outre le balancement du premier récipient (114) et/ou du deuxième récipient (116).

15. Procédé selon l'une quelconque des revendications 13 à 14, comprenant en outre le chargement manuel du deuxième récipient (116) dans le deuxième compartiment (126) à partir de la deuxième entrée (106).
